# EUROPEAN PATENT APPLICATION

(11) **EP 4 773 458 A1**
(43) Date of publication of application: **08.07.2026**
(21) Application number: 24857694.4
(22) Date of filing: 12.03.2024
(51) Int. Cl.: H02J 7/00, H02J 3/32

(54) **POWER CONVERSION SYSTEM-BASED CHARGING METHOD AND APPARATUS, AND POWER CONVERSION SYSTEM**

(30) Priority: 28.08.2023 CN 202311096847
(71) Applicant: Sungrow Power Supply Co., Ltd., Hefei, Anhui 230088 (CN)
(72) Inventor: SUN, Pengpeng, Hefei, Anhui 230088 (CN); DENG, Kai, Hefei, Anhui 230088 (CN); ZHENG, Feiyang, Hefei, Anhui 230088 (CN)
(74) Representative: Epping - Hermann - Fischer
(86) International application number: PCT/CN2024/081133
(87) International publication number: WO 2025/044141

(57) **Abstract**

A power conversion system-based charging method and apparatus, and a power conversion system. A soft-start circuit (301) connected in parallel with a first branch (302) can be used to perform voltage compensation on a bus by means of a direct current side. A voltage of the first branch (302) of a positive electrode of a battery is acquired as a first voltage, a voltage of a second branch (303) of the positive electrode of the battery is acquired as a second voltage, a difference between said voltages is calculated, the value of the first voltage is compared with the value of the second voltage when the difference is greater than a preset voltage value, the bus undergoes voltage compensation by using the direct current side so that the voltage of the bus is equal to the smaller voltage value, and then the bus is charged on the basis of the larger voltage value. A power conversion system is compatible with a multi-branch system and is used for a multi-branch topology, and a voltage compensation method of the power conversion system is not limited by the incapability to perform voltage compensation due to a low voltage of the branch where the soft-start circuit (301), thereby reducing the cost and improving the efficiency without affecting the system function, and greatly improving the utilization rate.

## Description

This application claims the priority to Chinese Patent Application No. 202311096847.X, titled "POWER CONVERSION SYSTEM-BASED CHARGING METHOD AND APPARATUS, AND POWER CONVERSION SYSTEM", filed on August 28, 2023 with the China National Intellectual Property Administration, which is incorporated herein by reference in its entirety.

### FIELD

The present disclosure relates to the field of energy storage, and in particular to a charging method and charging apparatus for a power conversion system, and a power conversion system.

### BACKGROUND

A Power Conversion System (PCS) is an apparatus in an energy storage system that connects the battery system to the power grid and achieves a bidirectional electric energy conversion. The PCS is able to convert a direct current power from a storage battery into an alternating current power and transmit the alternating current power to the power grid or an alternating current load for use, and is further able to rectify an alternating current power from the power grid into a direct current power to charge the storage battery.

During a charging and discharging process of conventional PCS systems, a voltage imbalance may occur between battery packs, which may cause damage to a battery and cause the PCS to fail to supply a stable electric energy. As a result, costs are increased and the efficiency is low. Therefore, how to reduce the costs, improve the efficiency and improve a utilization rate of the PCS without affecting system functionality is a technical issue to be urgently addressed by those skilled in the art.

### SUMMARY

Based on the aforementioned issues, a charging method and charging apparatus for a power conversion system, and a power conversion system are provided according to the present disclosure, to reduce the costs, improve the efficiency and improve a utilization rate of the PCS without affecting system functionality.

A charging method for a power conversion system is provided according to the present disclosure. The charging method includes:
obtaining a voltage of a first branch from a positive electrode of a battery as a first voltage, and obtaining a voltage of a second branch from the positive electrode of the battery as a second voltage;
calculating a voltage difference between the first voltage and the second voltage;
comparing, in response to the voltage difference being greater than a preset voltage, the first voltage with the second voltage to determine the larger voltage and the smaller voltage;
replenishing electric energy of a bus through the battery at a direct-current side, to cause a bus voltage to be equal to the smaller voltage; and
charging the bus based on the larger voltage.

In an embodiment, the replenishing the electric energy of the bus through the battery at the direct-current side, to cause the bus voltage to be equal to the smaller voltage includes:
switching on a slow-starting contactor arranged in the first branch to replenish the electric energy of the bus; and
switching off the slow-starting contactor in response to the bus being charged to a voltage equal to the smaller voltage.

In an embodiment, the charging the bus based on the larger voltage includes:
switching on a second direct-current contactor in the second branch in response to the second voltage being smaller than the first voltage;
switching on a first direct-current contactor in the first branch in response to the second voltage being equal to the first voltage; and
charging the bus by using the first voltage as the larger voltage.

In an embodiment, the charging the bus based on the larger voltage includes:
switching on a first direct-current contactor in the first branch in response to the first voltage being smaller than the second voltage;
switching on a second direct-current contactor in the second branch in response to the first voltage being equal to the second voltage; and
charging the bus by using the second voltage as the larger voltage.

Based on the charging method for a power conversion system as described above, a charging apparatus for a power conversion system is further provided according to the present disclosure. The charging apparatus includes: a voltage obtaining unit, a difference calculation unit, a comparison unit, an electric energy replenishment unit, and a charging unit.

The voltage obtaining unit is configured to obtain a voltage of a first branch from a positive electrode of a battery as a first voltage; and obtain a voltage of a second branch from the positive electrode of the battery as a second voltage.

The difference calculation unit is configured to calculate a voltage difference between the first voltage and the second voltage.

The comparison unit is configured to compare, in response to the voltage difference being greater than a preset voltage, the first voltage with the second voltage to determine the larger voltage and the smaller voltage e.

The electric energy replenishment unit is configured to replenish electric energy of a bus through the battery at a direct-current side, to cause a bus voltage to be equal to the smaller voltage.

The charging unit is configured to charge the bus based on the larger voltage.

In an embodiment, the electric energy replenishment unit includes:
a slow-starting contactor switching-on sub-unit, configured to switch on a slow-starting contactor arranged in the first branch to replenish the electric energy of the bus; and
a slow-starting contactor switching-off sub-unit, configured to switch off the slow-starting contactor in response to the bus being charged to a voltage equal to the smaller voltage.

In an embodiment, the charging unit is configured to:
switch on a second direct-current contactor in the second branch in response to the second voltage being smaller than the first voltage;
switch on a first direct-current contactor in the first branch in response to the second voltage being equal to the first voltage; and
charge the bus by using the first voltage as the larger voltage.

In an embodiment, the charging unit is configured to:
switch on a first direct-current contactor in the first branch in response to the first voltage being smaller than the second voltage;
switch on a second direct-current contactor in the second branch in response to the first voltage being equal to the second voltage; and
charge the bus by using the second voltage as the larger voltage.

Based on the charging method for a power conversion system as described above, a power conversion system is further provided according to the present disclosure. The power conversion system includes: a slow-starting circuit, a first branch, a second branch, and a measurement and control module.

The slow-starting circuit is connected in parallel with the first branch, and a quantity of the slow-starting circuit is one.

A battery side of the power conversion system is connected to a positive electrode of a battery via the first branch and the second branch.

The slow-starting circuit is configured to replenish electric energy of a bus.

The measurement and control module is configured to obtain a voltage of the first branch, a voltage of the second branch, and a bus voltage; calculate a difference between the voltage of the first branch and the voltage of the second branch; compare the voltage of the first branch with the voltage of the second branch; and control operating states of the slow-starting circuit, the first branch and the second branch based on a calculation result and a comparison result.

In an embodiment, the slow-starting circuit includes a slow-starting contactor. The slow-starting contactor is connected in parallel with a first direct-current contactor in the first branch.

In an embodiment, the second branch is provided with a second direct-current contactor.

In an embodiment, a bus side of the power conversion system is connected to a bus voltage equalization circuit.

A charging method and charging apparatus for a power conversion system, and a power conversion system are provided according to the present disclosure. Electric energy of a bus may be replenished by using a slow-starting circuit connected in parallel with a first branch through a direct-current side. A voltage of a first branch from a positive electrode of a battery is obtained as a first voltage, a voltage of a second branch from the positive electrode of the battery is obtained as a second voltage, and a voltage difference between the first voltage and the second voltage is calculated. In a case that the voltage difference is greater than a preset voltage, the first voltage is compared with the second voltage. The electric energy of the bus is replenished through a direct-current side, to cause a bus voltage to be equal to the smaller voltage. Subsequently, the bus is charged based on the larger voltage. The power conversion system according to the present disclosure is compatible with a multi-branch system and is used for a multi-branch topology, and the charging method for a power conversion system addresses the issue of failing to replenish electric energy due to a low voltage of a branch provided with a soft-starting circuit, thereby reducing the costs and improving the efficiency without affecting the system functionality, and greatly improving the utilization rate.

### BRIEF DESCRIPTION OF THE DRAWINGS

For more clearly illustrating technical solutions in the embodiments of the present disclosure or the conventional technology, drawings referred to describe the embodiments or the conventional technology are briefly described hereinafter. Apparently, the drawings in the following description are only some embodiments of the present disclosure, and for those skilled in the art, other drawings may be obtained based on these drawings without any creative efforts.
FIG. 1 is a schematic flowchart of a charging method for a power conversion system according to an embodiment of the present disclosure;
FIG. 2 is a schematic flowchart of a charging method for a power conversion system according to another embodiment of the present disclosure;
FIG. 3a is a schematic structural view of a power conversion system according to an embodiment of the present disclosure;
FIG. 3b is a schematic structural view of the power conversion system in actual use according to an embodiment of the present disclosure;
FIG. 4 is a schematic structural view of a charging apparatus for a power conversion system according to an embodiment of the present disclosure.

### DETAILED DESCRIPTION

Hereinafter technical solutions in embodiments of the present disclosure are described clearly and completely in conjunction with the drawings in embodiments of the present disclosure. Apparently, the described embodiments are only some rather than all embodiments of the present disclosure. Based on the embodiments of the present disclosure, all other embodiments obtained by those skilled in the art without any creative work fall within the protection scope of the present disclosure.

In a first embodiment, based on a power conversion system described above, a charging method for a power conversion system is provided in the present embodiment.

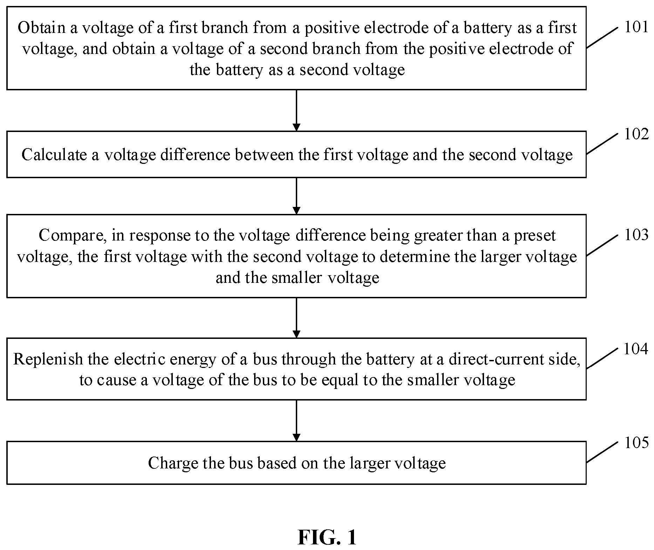

Referring to FIG. 1, the charging method for a power conversion system according to the present embodiment includes the following steps 101 to 105.

In step 101, a voltage of a first branch from a positive electrode of a battery is obtained as a first voltage, and a voltage of a second branch from the positive electrode of the battery is obtained as a second voltage.

In the present embodiment, a voltage of the first branch of the battery at a direct current side may be sampled as the first voltage, and a voltage of the second branch of the battery may be sampled as the second voltage. Further, a voltage may be sampled from a bus voltage equalization circuit as a bus voltage.

In step 102, a voltage difference between the first voltage and the second voltage is calculated.

In an embodiment of the present disclosure, the voltage difference may be an absolute value. In another embodiment, the first voltage may be divided by the second voltage to obtain a ratio of the first voltage to the second voltage, and then the ratio is compared with a preset ratio in a subsequent step. A calculation method for the first voltage and the second voltage is not limited herein, as long as an excessively large difference between the first voltage and the second voltage can be determined.

In step 103, in a case that the voltage difference is greater than a preset voltage, the first voltage is compared with the second voltage to determine the larger voltage and the smaller voltage.

In an embodiment of the present disclosure, the preset voltage may be set to 15V. The preset voltage is not limited herein. In a case that the voltage difference is less than or equal to the preset voltage, electric energy of the bus is not to be replenished.

In the present embodiment, the smaller voltage of the first voltage and the second voltage is determined to replenish electric energy of the bus to cause a bus voltage to be equal to the smaller voltage. The larger voltage of the first voltage and the second voltage is determined to charge the bus to cause the bus voltage to be equal to the larger voltage.

In step 104, the electric energy of the bus is replenished through the battery at a direct-current side, to cause a bus voltage to be equal to the smaller voltage.

In the present embodiment, an electric energy replenishment process may include as follows. In a case that the first voltage is greater than the second voltage, a slow-starting contactor in the first branch is switched on. In this case, the battery at the direct-current side is slow-started and a battery side is connected, while the power grid at an alternating-current side is not connected, thereby replenishing electric energy of the bus by using the battery. Once the bus voltage is charged to a voltage equal to the second voltage, the slow-starting contactor is switched off.

In step 105, the bus is charged based on the larger voltage.

In an embodiment of the present disclosure, in a case that the second voltage is smaller than the first voltage, a second direct-current contactor in the second branch is switched on, thereby activating a direct-current grid-connected constant voltage mode. In this case, the direct-current grid-connected constant voltage mode may include as follows. The larger voltage is determined as a target voltage, that is, the first voltage. Once the second voltage is charged to a voltage equal to the target voltage, the first direct-current contactor in the first branch is switched on to charge the bus by using the target voltage.

In a case that the first voltage is smaller than the second voltage, the first direct-current contactor in the first branch is switched on, thereby activating a direct-current grid-connected constant voltage mode. In this case, the direct-current grid-connected constant voltage mode may include as follows. The larger voltage is determined as a target voltage, that is, the second voltage. Once the first voltage is charged to a voltage equal to the target voltage, the second direct-current contactor in the second branch is switched on to charge the bus by using the target voltage.

In the present embodiment, equality of the voltage is relative. In an embodiment, two voltages equal to each other refers to an absolute value of the voltage difference between the two voltages that is within a preset range. For example, the preset range is set to ±2V. In this case, the first voltage is 10V, and the second branch is to be charged. It is determined that charging of the second branch is complete in a case that the second voltage is charged to 8V-12V.

In the present embodiment, a condition that only the second voltage is smaller than the first voltage for replenishing electric energy using a slow-starting (that is, the electric energy is replenished only when a voltage of a branch of the battery at the direct-current side which is connected in parallel with a slow-starting circuit is high) may be omitted. Instead, the slow-starting circuit is first closed and connected to the battery at the direct-current side, thereby replenishing electric energy of the bus by using the battery. Subsequently, the slow-starting circuit is opened, and the bus may be charged by using the power grid at the alternating-current side. During this process, both the power grid at the alternating-current side and the battery at the direct-current side operate in a grid-connected state. The battery is charged by using the power grid, and a low-voltage branch is charged to a voltage equal to a voltage of a high-voltage branch. Subsequently, the bus is charged until the bus voltage is equal to the voltage of the high-voltage branch. The method according to the present disclosure is well-suited for application in power conversion systems with power limitations. In this way, a utilization rate of the power conversion system can be improved and the issue of the voltage imbalance in a circuit without the slow-starting is addressed. Furthermore, the method can be applied to multi-branch systems. A condition that a system includes a topology with multiple branches (greater than two branches) is described below through a second embodiment.

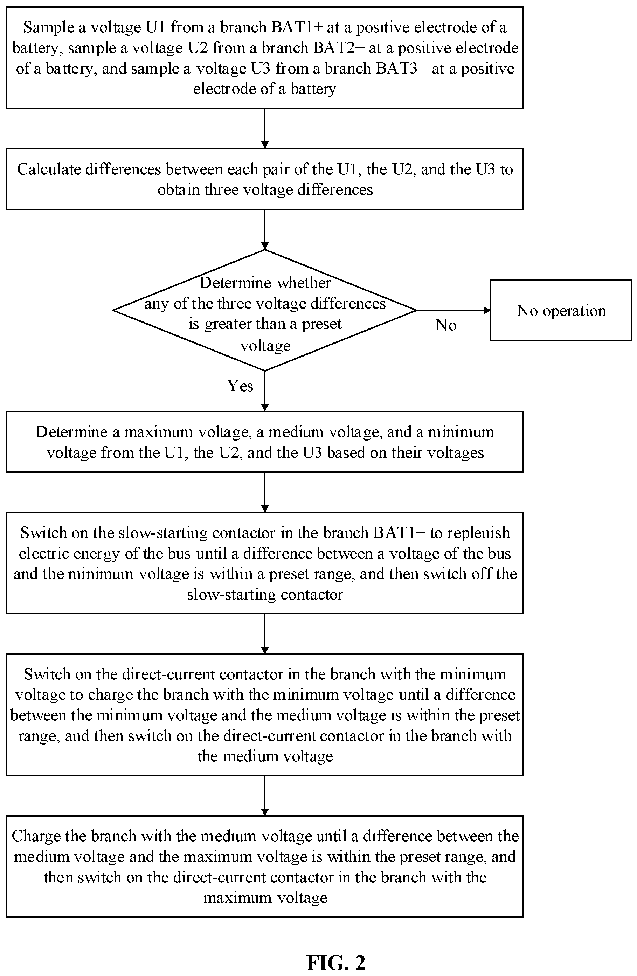

In a second embodiment, a charging method for a power conversion system is provided according to another embodiment of the present disclosure. Referring to FIG. 2, the method according to the present embodiment is applied to a power conversion system regarding a topology with multiple branches, such as, three branches.

In step 201, a voltage U1 may be sampled from a branch BAT1+ at a positive electrode of a battery, a voltage U2 may be sampled from a branch BAT2+ at a positive electrode of a battery, and a voltage U3 may be sampled from a branch BAT3+ at a positive electrode of a battery.

In the present embodiment, the branch BAT1+ is connected in parallel with a slow-starting circuit, and the slow-starting circuit is provided with a slow-starting contactor. The BAT2+ is provided with a direct-current contactor, and the BAT3+ is provided with a direct-current contactor.

In step 202, differences between each pair of the U1, the U2, and the U3 are calculated to obtain three voltage differences.

In the present embodiment, the voltage differences are absolute values. In an embodiment, three separate divisions may be performed on each pair of the U1, the U2 and the U3 to obtain three voltage ratios, and then the three voltage ratios are compared with a preset voltage ratio in a subsequent step. The calculation and comparison methods for the three voltages are not limited herein, as long as they implement the subsequent step.

In step 203, it is determined whether any of the three voltage differences is greater than a preset voltage. In a case that any of the three voltage differences is greater than the preset voltage, the process goes to step 204. In a case that each of the three voltage differences is less than or equal to the preset voltage, no operation is performed.

In the present embodiment, in a case that each voltage difference is less than the preset voltage, electric energy of the bus is not to be replenished. The preset voltage may be set to 15V.

In step 204, a maximum voltage, a medium voltage, and a minimum voltage are determined from the U1, the U2, and the U3 based on their voltages.

In step 205, the slow-starting contactor in the branch BAT1+ is switched on to replenish electric energy of the bus until a difference between a bus voltage and the minimum voltage is within a preset range, and then the slow-starting contactor is switched off.

In the present embodiment, the preset range may be set to ±2V.

In step 206, the direct-current contactor in the branch with the minimum voltage is switched on to charge the branch with the minimum voltage until a difference between the minimum voltage and the medium voltage is within the preset range, and then the direct-current contactor in the branch with the medium voltage is switched on.

In step 207, the branch with the medium voltage is charged until a difference between the medium voltage and the maximum voltage is within the preset range, and then the direct-current contactor in the branch with the maximum voltage is switched on.

The present embodiment is for a topology with three branches, which is not limited by BAT2<BAT1 (that is, the electric energy is replenished only when a voltage of a branch provided with slow-starting contactor is high). The bus is charged first by a slow-start manner, that is, a branch with a high battery voltage is used to charge the bus. When the bus is charged to a voltage equal to the minimum voltage, the direct-current grid-connected constant-voltage mode is activated to charge the battery, so that a minimum battery voltage is increased to a high-voltage battery. Subsequently, the bus is charged to a voltage equal to the high-voltage battery. The method is not limited to a dual-branch topology, offering a high versatility while saving slow-starting circuits, thereby reducing costs.

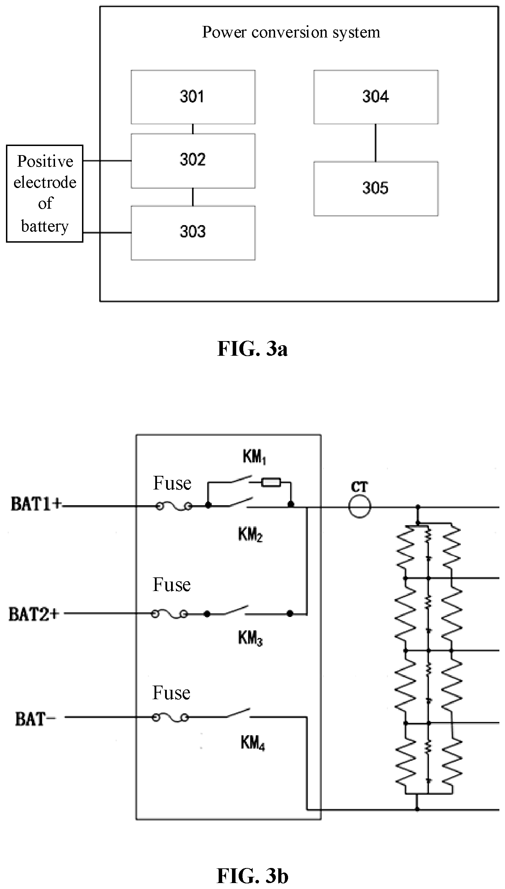

Based on the charging method for a power conversion system according to the above embodiment, a power conversion system is further provided according to an embodiment of the present disclosure. In the embodiment, referring to FIG. 3a, the power conversion system includes a slow-starting circuit 301, a first branch 302, a second branch 303, and a measurement and control module 304.

In the power conversion system according to the present disclosure, the slow-starting circuit 301 is connected in parallel with the first branch 302, and a quantity of the slow-starting circuit 301 is one. A battery side of the power conversion system is connected to a positive electrode of a battery at a direct-current side via the first branch 302 and the second branch 303. The slow-starting circuit is configured to replenish electric energy of a bus.

In the power conversion system according to the present disclosure, the measurement and control module 304 is configured to obtain a voltage of the first branch 302, a voltage of the second branch 303, and a bus voltage; calculate a voltage difference between the voltage of the first branch 302 and the voltage of the second branch 303; compare the voltage of the first branch 302 with the voltage of the second branch 303; and control operating states of the slow-starting circuit 301, the first branch 302 and the second branch 303 based on a calculation result and a comparison result.

FIG. 3b is a schematic structural view of the power conversion system according to the present disclosure in actual use. As shown in FIG. 3b, BAT1+ represents the first branch at the positive electrode of the battery, BAT2+ represents the second branch at the positive electrode of the battery, and BAT- represents a branch at a negative electrode of the battery. An internal structure of the power conversion system is shown in the box, where KM1 represents a slow-starting contactor in the slow-starting circuit, KM2 represents a first direct-current contactor in the first branch, KM3 represents a second direct-current contactor in the second branch, and KM4 represents a direct-current contactor in the branch at the negative electrode of the battery. A left side of the box is the battery, while a right side of the box is the bus voltage equalization circuit.

In the power conversion system according to the present disclosure, the KM1 is connected in parallel with the KM2. The KM1 is switched on to replenish electric energy of the bus, the KM3 and the KM2 are configured to achieve a direct-current grid-connected constant voltage, and the bus voltage equalization circuit is configured to achieve the direct-current grid-connected constant voltage.

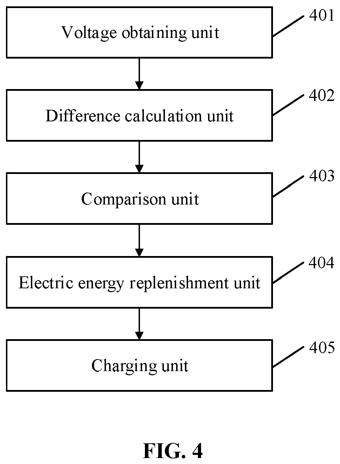

Based on the charging method for a power conversion system according to the above embodiment, a charging apparatus for a power conversion system is further provided according to an embodiment of the present disclosure. Referring to FIG. 4, the charging apparatus for a power conversion system includes a voltage obtaining unit 401, a difference calculation unit 402, a comparison unit 403, an electric energy replenishment unit 404, and a charging unit 405.

The voltage obtaining unit 401 is configured to obtain a voltage of a first branch from a positive electrode of a battery as a first voltage, and obtain a voltage of a second branch from the positive electrode of the battery as a second voltage.

The difference calculation unit 402 is configured to calculate a voltage difference between the first voltage and the second voltage.

The comparison unit 403 is configured to compare, in response to the voltage difference being greater than a preset voltage, the first voltage with the second voltage to determine the larger voltage and the smaller voltage.

The electric energy replenishment unit 404 is configured to replenish electric energy of a bus through the battery at a direct-current side, to cause a bus voltage to be equal to the smaller voltage.

The charging unit 405 is configured to charge the bus based on the larger voltage.

In an embodiment, the electric energy replenishment unit 404 includes:
a slow-starting contactor switching-on sub-unit, configured to switch on a slow-starting contactor arranged in the first branch to replenish the electric energy of the bus; and
a slow-starting contactor switching-off sub-unit, configured to switch off the slow-starting contactor in response to the bus being charged to a voltage equal to the smaller voltage.

In an embodiment, the charging unit 405 is configured to:
switch on a second direct-current contactor in the second branch in response to the second voltage being smaller than the first voltage;
switch on a first direct-current contactor in the first branch in response to the second voltage being equal to the first voltage; and
charge the bus by using the first voltage as the larger voltage.

In an embodiment, the charging unit 405 is configured to:
switch on a first direct-current contactor in the first branch in response to the first voltage being smaller than the second voltage;
switch on a second direct-current contactor in the second branch in response to the first voltage being equal to the second voltage; and
charge the bus by using the second voltage as the larger voltage.

The embodiments in the present disclosure are described in a progressive manner. Since the apparatus disclosed in the embodiments correspond to the method disclosed in the embodiments, the description of the apparatus is simple, and reference may be made to the relevant part of the method.

It should be further illustrated that relation terms such as "first" and "second" herein are only used to distinguish one entity or operation from another entity or operation, which does not necessarily require or imply that there is an actual relation or sequence between these entities or operations. Furthermore, the terms "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other identical elements may exist in the process, method, article or device including the series of elements.

Steps of the method or algorithm described in the embodiments disclosed herein may be directly implemented by hardware, a software module executable by a processor, or a combination thereof. The software module may be located in a Random Access Memory (RAM), an internal memory, a Read Only Memory (ROM), an Electrically Programmable ROM, an Electrically-Erasable Programmable ROM, a register, a hard disk, a removable disk drive, a CD-ROM, or any other storage medium known in the art.

The features in the embodiments in this specification may be replaced or combined with each other, so that those skilled in the art can implement or practice the present disclosure.

The above description of the disclosed embodiments enables those skilled in the art to implement or utilize the present disclosure. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

## Claims

1. A charging method for a power conversion system, **characterized by** comprising:
obtaining a voltage of a first branch from a positive electrode of a battery as a first voltage, and obtaining a voltage of a second branch from the positive electrode of the battery as a second voltage;
calculating a voltage difference between the first voltage and the second voltage;
comparing, in response to the voltage difference being greater than a preset voltage, the first voltage with the second voltage to determine the larger voltage and the smaller voltage;
replenishing electric energy of a bus through the battery at a direct-current side, to cause a bus voltage to be equal to the smaller voltage; and
charging the bus based on the larger voltage.

2. The charging method for a power conversion system according to claim 1, wherein the replenishing electric energy of the bus through the battery at the direct-current side, to cause the bus voltage to be equal to the smaller voltage comprises:
switching on a slow-starting contactor arranged in the first branch to replenish the electric energy of the bus; and
switching off the slow-starting contactor in response to the bus being charged to a voltage equal to the smaller voltage.

3. The charging method for a power conversion system according to claim 1, wherein the charging the bus based on the larger voltage comprises:
switching on a second direct-current contactor in the second branch in response to the second voltage being smaller than the first voltage;
switching on a first direct-current contactor in the first branch in response to the second voltage being equal to the first voltage; and
charging the bus by using the first voltage as the larger voltage.

4. The charging method for a power conversion system according to claim 1, wherein the charging the bus based on the larger voltage comprises:
switching on a first direct-current contactor in the first branch in response to the first voltage being smaller than the second voltage;
switching on a second direct-current contactor in the second branch in response to the first voltage being equal to the second voltage; and
charging the bus by using the second voltage as the larger voltage.

5. A charging apparatus for a power conversion system, **characterized by** comprising: a voltage obtaining unit, a difference calculation unit, a comparison unit, an electric energy replenishment unit, and a charging unit, wherein
the voltage obtaining unit is configured to obtain a voltage of a first branch from a positive electrode of a battery as a first voltage; and obtain a voltage of a second branch from the positive electrode of the battery as a second voltage;
the difference calculation unit is configured to calculate a voltage difference between the first voltage and the second voltage;
the comparison unit is configured to compare, in response to the voltage difference being greater than a preset voltage, the first voltage with the second voltage to determine the larger voltage and the smaller voltage;
the electric energy replenishment unit is configured to replenish electric energy of a bus through the battery at a direct-current side, to cause a bus voltage to be equal to the smaller voltage; and
the charging unit is configured to charge the bus based on the larger voltage.

6. The charging apparatus for a power conversion system according to claim 5, wherein the electric energy replenishment unit comprises:
a slow-starting contactor switching-on sub-unit, configured to switch on a slow-starting contactor arranged in the first branch to replenish the electric energy of the bus; and
a slow-starting contactor switching-off sub-unit, configured to switch off the slow-starting contactor in response to the bus being charged to a voltage equal to the smaller voltage.

7. The charging apparatus for a power conversion system according to claim 5, wherein the charging unit is configured to:
switch on a second direct-current contactor in the second branch in response to the second voltage being smaller than the first voltage;
switch on a first direct-current contactor in the first branch in response to the second voltage being equal to the first voltage; and
charge the bus by using the first voltage as the larger voltage.

8. The charging apparatus for a power conversion system according to claim 5, wherein the charging unit is configured to:
switch on a first direct-current contactor in the first branch in response to the first voltage being smaller than the second voltage;
switch on a second direct-current contactor in the second branch in response to the first voltage being equal to the second voltage; and
charge the bus by using the second voltage as the larger voltage.

9. A power conversion system, **characterized by** comprising: a slow-starting circuit, a first branch, a second branch, and a measurement and control module, wherein
the slow-starting circuit is connected in parallel with the first branch;
a battery side of the power conversion system is connected to a positive electrode of a battery via the first branch and the second branch;
the slow-starting circuit is configured to replenish electric energy of a bus; and
the measurement and control module is configured to:
obtain a voltage of the first branch, a voltage of the second branch, and a bus voltage;
calculate a difference between the voltage of the first branch and the voltage of the second branch;
compare the voltage of the first branch with the voltage of the second branch; and
control operating states of the slow-starting circuit, the first branch and the second branch based on a calculation result and a comparison result.

10. The power conversion system according to claim 9, wherein the slow-starting circuit comprises a slow-starting contactor, wherein
the slow-starting contactor is connected in parallel with a first direct-current contactor in the first branch.

11. The power conversion system according to claim 9, wherein the second branch is provided with a second direct-current contactor.

12. The power conversion system according to claim 9, wherein a bus side of the power conversion system is connected to a bus voltage equalization circuit.
